# EUROPÄISCHE PATENTSCHRIFT

(11) **EP 2 855 270 B1**
(45) Veröffentlichungstag und Bekanntmachung des Hinweises auf die Patenterteilung: **19.02.2020**
(21) Anmeldenummer: 13725571.7
(22) Anmeldetag: 24.05.2013
(51) Int. Cl.: B64D 11/06

(54) **FLUGZEUGSITZ MIT EINEM SITZUNTERBAU**
AIRCRAFT SEAT HAVING A SEAT SUBSTRUCTURE
SIÈGE D'AVION DOTÉ D'UNE STRUCTURE FORMANT PIÉTEMENT

(30) Priorität: 24.05.2012 DE 102012208719
(43) Veröffentlichungstag der Anmeldung: 08.04.2015
(73) Patentinhaber: Lufthansa Technik AG, 22335 Hamburg (DE)
(72) Erfinder: THOMASCHEWSKI, Oliver, 22846 Norderstedt (DE)
(74) Vertreter: Müller Verweyen
(86) Internationale Anmeldenummer: PCT/EP2013/001527
(87) Internationale Veröffentlichungsnummer: WO 2013/174517

(56) Entgegenhaltungen:
- WO-A2-2006/124555
- DE-A1-102006 049 001
- US-A1- 2004 212 243
- US-A1- 2005 140 193

## Beschreibung

Die Erfindung betrifft einen Flugzeugsitz mit einem Sitzunterbau, wobei der Sitzunterbau an einer ersten Seite an einer Sitzeinheit des Flugzeugsitzes befestigbar ist.

Flugzeugsitze für Passagierkabinen werden typischerweise an der Bodenstruktur des Flugzeugs befestigt. Für eine sichere Verwendung des Flugzeugsitzes im Luftverkehrsbetrieb werden durch die entsprechenden Behörden verschiedene Anforderungen formuliert, die die Sicherheit des Passagiers auf dem Flugzeugsitz in verschiedenen Situationen sicherstellen sollen.

Aus dem Stand der Technik sind Sitzunterbauten von Flugzeugsitzen bekannt, die ein metallisches Sitzgestell als kraftübertragendes Element aufweisen. In der Regel weist das Sitzgestell eine Fachwerkstruktur auf. Als Material wird typischerweise eine Aluminiumlegierung verwendet. Für einen Crashfall besteht die Anforderung, dass die dynamische Insassenbelastung unter definierten Bedingungen nicht überschritten wird. Hierfür ist es notwendig, dass der Flugzeugsitz eine Möglichkeit bietet, die auf den Passagier einwirkenden Kräfte durch Aufnahme kinetischer Energie zu begrenzen. Die Steifigkeit des Sitzunterbaus wird konstruktiv so ausgelegt, dass die auf den sitzenden Passagier auftretenden Kräfte in einem Crashfall durch die Verformung des Sitzunterbaus begrenzt werden.

Die plastische Verformung zur Aufnahme der kinetischen Energie erfolgt dabei über den Sitzunterbau verteilt durch die tragende Struktur. Bei translatorischen Beschleunigungen in der Bodenebene der Flugzeugkabine bzw. den resultierenden Kräften durch einen Crash ergibt sich durch die verteilte Verformung über den Sitzunterbau ein Äquivalent zu einer Rotation des Sitzes um einen virtuellen Drehpunkt in Bodennähe der Flugzeugkabine. Die resultierende Rotation führt im oberen Bereich des Flugzeugsitzes zu einer deutlichen translatorischen Verschiebung und somit zu einer größeren Bewegungsenveloppe, die als Freiraum von weiteren Bauteilen freigehalten werden muss, um Kollisionen des Flugzeugsitzes und des Passagiers mit den weiteren Bauteilen zu verhindern.

Alternativ besteht die Möglichkeit, den Freiraum um den Passagier so klein zu halten, dass der zurückgelegte Weg, beispielsweise des Kopfes, im Crashfall so kurz ist, dass dieser bis zum Auftreffen auf einem fest installierten Teil, zum Beispiel Stuhl oder Tisch, noch keine kritische Relativgeschwindigkeit aufgebaut hat, die zu Verletzungen führt. Hieraus ergeben sich zur Vermeidung von Verletzungen bei einer großen Bewegungsenveloppe die Möglichkeiten entweder beispielsweise eine enge Bestuhlung oder einen sehr großen Freiraum vorzusehen. Beide Varianten sind nachteilig, weil sie zu Einbußen im Komfort oder zu einem hohen Platzbedarf in der räumlich begrenzten Flugzeugkabine führt. Weiterhin stellt sich eine Polsterung aller vorhandenen Teile im Freiraum unpraktikabel dar.

Die metallische Fachwerkstruktur weist große Abmessungen auf und bietet aufgrund der notwendigen plastischen Verformbarkeit geringes Potential zur Gewichtsreduktion.

Weiter ist aus der DE 10 2006 049 001 A1 eine Sitzvorrichtung für ein Flugzeug bekannt, die eine Schalenstruktur aufweist, die dazu dient, die Sitzeinrichtung an einer Bodenstruktur zu befestigen.

Die WO 2006/124555 A2 zeigt eine energieabsorbierende Befestigungseinrichtung, die unmittelbar an der flugzeugfesten Sitzschiene angeordnet ist. Dabei ist der Sitz an zwei hinteren Stellen über eine Baugruppe befestigt, die in einem Crashfall eine Rotationsbewegung im Bereich der Sitzschiene ermöglicht. Im vorderen Bereich erfolgt die Befestigung an der Sitzschiene über einen Bolzen, der über eine Bolzenbaugruppe an dem Sitz befestigt ist. Diese Bolzenbaugruppe ist dazu eingerichtet, bei Überschreitung einer auf den Bolzen wirkenden Zugkraft, den Bolzen unter Energiedissipation in eine Längsrichtung freizugeben.

Aus der US 2004/0212243 A1 ist ein Sitzgestell bekannt, das einen Träger aufweist, der zwei Teile des Sitzgestells miteinander verbindet, wobei der Träger durch einen Holkörper gebildet ist.

Die US 2005/0140193 A1 offenbart einen Passagiersitz für ein Fahrzeug, wobei der eigentliche Sitz durch ein starres Schalenbauteil gehalten ist. Das Schalenbauteil ist über eine Hauptstrebe mit Beinelementen verbunden, die wiederum mit dem Boden des Fahrzeugs verbunden sind.

Die Aufgabe der Erfindung ist es, einen Flugzeugsitz anzugeben, der eine möglichst geringe Bewegungsenveloppe ermöglicht.

Die Aufgabe wird ausgehend von dem Oberbegriff des Anspruchs 1 mit dessen kennzeichnenden Merkmalen gelöst. Es wird ein Flugzeugsitz mit einem Sitzunterbau vorgeschlagen, wobei der Sitzunterbau an einer ersten Seite an einer Sitzeinheit des Flugzeugsitzes befestigbar ist. Erfindungsgemäß ist der Sitzunterbau an einer zweiten Seite zur flugzeugfesten Befestigung an einer Bodenanbindungsbaugruppe befestigbar, wobei der Sitzunterbau durch wenigstens ein biegesteifes Schalenbauteil gebildet ist, wobei ein oberhalb des Sitzunterbaus angebrachtes Mittel zur Kraftbegrenzung vorgesehen ist, wobei das Mittel zur Kraftbegrenzung zum Schutz der Überlastung eines Passagiers im Crashfall durch die Begrenzung von Kräften vorgesehen ist, welche in der Bodenebene auf den Flugzeugsitz wirken.

Die Ausführung des Sitzunterbaus mit mindestens einem biegesteifen Schalenbauteil führt insgesamt für den Sitzunterbau zu einem im Vergleich zum Stand der Technik sehr steifen Sitzunterbau. Der Sitzunterbau ist durch die Bauweise insbesondere in Biegerichtung, d.h. gegenüber am Flugzeugsitz in der Bodenebene wirkenden Kräften, sehr steif, so dass in einem Crashfall die erste Seite des Sitzunterbaus, die zur Sitzfläche des Flugzeugsitzes gerichtet ist, eine möglichst geringe Verschiebung oder auch Deformation in der Bodenebene gegenüber der zweiten Seite des Sitzunterbaus erfährt. Die mechanische Anbindung an die Bodenanbindungsbaugruppe verfügt vorzugsweise ebenfalls über eine entsprechende Steifigkeit. Die Schalenbauweise ermöglicht hierbei eine sehr leichte Bauweise mit entsprechend hoher Steifigkeit. Durch den Sitzunterbau erfährt der Flugzeugsitz in einem Crashfall eine deutlich reduzierte Rotation um ein Rotationszentrum, wobei zudem das Rotationszentrum durch den steifen Sitzunterbau in Richtung der Sitzfläche verlagert wird. Hierdurch verkleinert sich die freizuhaltende Bewegungsenveloppe des Flugzeugsitzes mit dem Passagier für den Crashfall. Der Sitzunterbau ist somit nicht zur Aufnahme von kinetischer Energie durch Beschleunigungen in der Bodenebene vorgesehen. Der Sitzunterbau ist im Crashfall formstabil.

Die formstabile Ausführung des Sitzunterbaus mit einer steifen Bauweise, die für die Verlagerung des Drehpunkts bzw. Rotationszentrums des Flugzeugsitzes zur Sitzfläche hin notwendig ist, kann daher einer Vordeformation der Bodenstruktur der Flugzeugkabine, die vor dem eigentlichen Crashfall eintreten kann, und durch entsprechende behördliche Anforderungen abgebildet wird, allein nicht folgen. Die Befestigung des Sitzunterbaus an der Bodenstruktur erfolgt daher mittels einer Bodenanbindungsbaugruppe, so dass der Sitzunterbau nicht durch eine Vordeformation der Bodenstruktur belastet wird.

Die Kraftbegrenzung von Kräften, die in der Bodenebene wirken, zum Schutz der Überlastung des Passagiers im Crashfall erfolgt oberhalb des Sitzunterbaus durch hierfür vorgesehene weitere Mittel. Der Flugzeugsitz weist daher vorzugsweise eine funktionale Trennung von lasttragenden und energieabsorbierenden Strukturen auf.

Die Strukturauslegung des Sitzunterbaus kann, ausgehend von einer steifen, formstabilen Struktur des Sitzunterbaus, ohne vorgesehene Verformung für eine Energieaufnahme im Crashfall erfolgen.

Die weiteren Mittel zur Energieabsorption im Crashfall können funktionsgemäß eine Kraftbegrenzung bewirken. Daher kann die Auslegung der lasttragenden Struktur des Flugzeugsitzes präzise erfolgen, so dass der Flugzeugsitz, insbesondere der Sitzunterbau, stark gewichtsreduziert werden kann. Der Sitzunterbau kann schmaler ausgeführt werden, wodurch der Sitzunterbau bei einer Drehbewegung der Sitzfläche nicht hervortritt. Der Sitzunterbau kann in seiner Grundfläche kleiner ausgeführt werden als die darüber angeordnete Sitzfläche.

Die Schalenbauweise ist als flächiges Tragwerk mit lasttragender Wirkung zu sehen, und von einfachen Verkleidungen des Sitzunterbaus zu unterscheiden. Der Sitzunterbau ist vorzugsweise ein Flächenbauteil, auch als Nichtfachwerk bezeichnet.

Flugzeugfest bezieht sich in diesem Zusammenhang auf die mechanische Anbindung an die Hauptstrukturen des Flugzeugs, in dem der Flugzeugsitz angeordnet ist, insbesondere auf die Bodenstruktur des Kabinenbodens des Flugzeugs.

In einer vorteilhaften Ausführungsform ist das Schalenbauteil mindestens in einer Richtung gekrümmt. Die Krümmung ist insbesondere für die Biege- und Beulsteifigkeit des Sitzunterbaus vorteilhaft, so dass insgesamt eine hohe Steifigkeit des Sitzunterbaus erreicht werden kann.

Vorzugsweise ist der Sitzunterbau zylinderförmig oder kegelförmig. Diese Formgestaltung des Sitzunterbaus führt zu einer säulenartigen Struktur für den Sitzunterbau, die neben mechanischen Gesichtspunkten auch ästhetische Vorteile bietet. Vorzugsweise ist der Sitzunterbau kegelförmig, um eine höhere Beulstabilität zu erreichen. Vorzugsweise beträgt die Differenz des mittleren Durchmessers der ersten und der zweiten Seite des Sitzunterbaus zwischen 10 mm und 100 mm, vorzugsweise 30 mm.

Weiterhin weist der Sitzunterbau vorzugsweise einen kreisförmigen oder elliptischen Querschnitt auf. Ein derartiger Querschnitt ist für eine leichte und steife Struktur vorteilhaft. Das Verhältnis von Hauptachse zur Nebenachse des Querschnitts ist vorzugsweise zwischen 1:1 bis 2:1.

In einer bevorzugten Ausführungsform weist der Sitzunterbau in wenigstens einem Querschnitt zur Hochachse ein geschlossenes Profil auf. Ein geschlossenes Profil ist für den Kraftverlauf und somit für die Stabilität und Festigkeit des Sitzunterbaus vorteilhaft. In einer vorteilhaften Ausführungsform weist der Sitzunterbau über seine gesamte Höhe oder über einen wesentlichen Teil seiner Höhe ein geschlossenes Profil auf.

Vorteilhafterweise ist der Sitzunterbau ein geschlossener Hohlkörper. Der geschlossene Hohlkörper kann einzelne Öffnungen, insbesondere auf der ersten und der zweiten Seite, aufweisen.

In einer bevorzugten Ausführungsform weist der Sitzunterbau auf zwei gegenüberliegenden Seiten gleich dimensionierte Handlöcher auf. Die Handlöcher können zu Montage- und Wartungszwecken dienen, um beispielsweise Zugriff auf die mechanischen Verbindungselemente auf der ersten und zweiten Seite des Sitzunterbaus zu bekommen. Die Ausführung mit zwei Handlöchern auf gegenüberliegenden Seiten erhält die Symmetrie des Sitzunterbaus, was bei den großen auftretenden Lasten im Crashfall ungewünschte Ausweichbewegungen der Struktur verhindert. Aus dem gleichen Grund sind Handlöcher vorzugsweise gleich dimensioniert, wobei weiterhin geringe Größen-, Form- und Positionsunterschiede zwischen den Handlöchern möglich sind. Die Handlöcher sind vorzugsweise seitlich angeordnet, wobei seitlich vornehmlich auf die Flugrichtung des Flugzeugs bezogen ist.

Auf diese Weise liegen die Handlöcher außerhalb des im typischen Crashfall stark belasteten Bereichs des Sitzunterbaus.

Vorzugsweise weist der Sitzunterbau mindestens ein vertikales Crashelement und/oder einen vertikalen Verformungsabschnitt auf. Das vertikale Crashelement bzw. ein entsprechend wirkender Verformungsabschnitt nimmt in einem Crashfall in dieser Richtung kinetische Energie auf und begrenzt dadurch die auf den Passagier einwirkenden Kräfte. Das explizite Vorsehen eines Crashelements ist vorteilhaft, um die Steifigkeit des Sitzunterbaus zu erhalten und gleichzeitig eine Kraftbegrenzung zu erreichen. Weiterhin können durch ein entsprechendes vertikales Crashelement die Polstermassen auf der Sitzfläche vergleichsweise dünn gehalten werden, da die Polstermassen keine kraftbegrenzende Wirkung im Crashfall übernehmen müssen. Dies reduziert die Brandlast des Flugzeugsitzes. Ein vertikales Crashelement kann deutlich leichter ausgeführt und besser ausgelegt werden als eine äquivalent wirkende Aufdickung der Sitzpolsterung. Weiterhin kann dies bezogen auf die notwendige Bauhöhe vorteilhaft sein.

Der Sitzunterbau ist vorteilhafterweise über ein Drehelement an einer Sitzeinheit befestigbar. Der Drehteller ermöglicht eine verbesserte Nutzung des Flugzeugsitzes beispielsweise in einer Anordnung mit Tischen zum verbesserten Aufstehen oder zur Ausrichtung bei Besprechungen oder Konferenzen. Die Ausrichtung mit dem Drehteller erfolgt für Start, Landung und Rollen vorzugsweise für den Sitzenden in Flugzeugrichtung nach vorn oder hinten. In einer weiteren alternativen Ausführungsform mit vergleichbaren Vorteilen ist der Sitzunterbau über ein Drehelement an der Bodenanbindungsbaugruppe befestigbar.

Weiterhin weist der Sitzunterbau vorzugsweise auf der ersten und/oder der zweiten Seite eine Translationseinheit auf. Eine Translationseinheit ermöglicht eine Relativbewegung zwischen dem Sitzunterbau und einer Bodenanbindungsbaugruppe und/oder einer Sitzeinheit, so dass der Flugzeugsitz durch einen Passagier in der Ebene des Kabinenbodens translatorisch verschoben werden kann. Die Befestigung von der Sitzeinheit und der Bodenanbindungsbaugruppe an dem Sitzunterbau kann über die Translationseinheit erfolgen. Die Translationseinheit ist vorteilhafterweise in einer Grundstellung blockiert, so dass keine Relativbewegung möglich ist, wobei die Grundstellung durch einen Sitzenden aufgehoben werden kann, um beispielsweise näher an einen möglichen Tisch heranrücken zu können.

Der Sitzunterbau weist in einer vorteilhaften Ausführungsform einen Hohlraum zur Aufnahme von mindestens einem elektrischen Gerät oder einem funktionellen Objekt auf. Elektrische Geräte, wie z.B. elektrische Steuerungseinheiten für die Sitzverstellung oder Bordunterhaltungssysteme, können in vorteilhafter Weise in dem Sitzunterbau angeordnet werden, da der vorzugsweise nach außen abgeschlossene Sitzunterbau für die entsprechenden Geräte mechanischen Schutz vor Manipulationen durch die Passagiere bietet, was beispielsweise bei einer Fachwerkstruktur für einen Sitzunterbau nur durch ein entsprechendes Gehäuse oder eine Verkleidung möglich ist. Funktionelle Objekte, die gegebenenfalls über die Handlöcher entnehmbar sein können, können beispielsweise Schwimmwesten oder Kissen sein. Weiterhin können funktionelle Objekte mechanische Anordnungen sein, die beispielsweise die Sitzverstellung ermöglichen.

Der Sitzunterbau ist vorzugsweise ein faserverstärktes Bauteil. Eine faserverstärkte Struktur des Sitzunterbaus ist insbesondere bei einer kohlenstofffaserverstärkten Struktur für eine hohe Steifigkeit des Sitzunterbaus vorteilhaft. Ein Schalenbauteil lässt sich vorteilhafterweise durch ein faserverstärktes Bauteil ausführen.

In einer vorteilhaften Ausführungsform weist der Sitzunterbau eine gewickelte Faserstruktur auf. Die gewickelte Faserstruktur ist aufgrund der typischen Formgebung des Sitzunterbaus vorteilhaft, da sie eine einfache Fertigung von röhrenartigen Strukturen erlaubt. Weiterhin können nur Teile der Struktur gewickelt sein, die beispielsweise durch weitere Faserlagen insbesondere vor einer Aushärtung des Matrixmaterials des Faserverbunds ergänzt werden.

Vorzugsweise weist der Sitzunterbau am oberen und/oder unteren Rand des Schalenbauteils einen metallischen Ring auf. Dieser Ring ist in vorteilhaften Ausführungsformen an das Schalenbauteil des Sitzunterbaus geklebt. Es sind jedoch auch andere Befestigungsformen, wie beispielsweise Nieten, möglich. Der metallische Ring ermöglicht eine einfache mechanische Verbindung des Sitzunterbaus an der ersten Seite an der Sitzeinheit und/oder an der zweiten Seite an einer Bodenanbindungsbaugruppe. Auf diese Weise kann der Sitzunterbau, insbesondere bei einem faserverstärkten Schalenbauteil, in einfacher Weise mit den weiteren Teilen des Flugzeugsitzes, z.B. durch Verschraubung, verbunden werden.

In einer bevorzugten Ausführungsform weist der Flugzeugsitz eine Bodenanbindungsbaugruppe auf, wobei der Sitzunterbau und wenigstens ein Teil der Bodenanbindungsbaugruppe ein Integralbauteil sind. Dies ermöglicht einen verbesserten Kraftfluss von der Bodenanbindungsbaugruppe auf den Sitzunterbau. Weiterhin sind keine mechanischen Elemente zur Herstellung der Verbindung im Sitzunterbau und in der Bodenanbindungsbaugruppe notwendig, was das Gewicht des Flugzeugsitzes reduziert.

Die Erfindung wird im Folgenden anhand bevorzugter Ausführungsformen unter Bezugnahme auf die beigefügten Figuren erläutert. Dabei zeigt:
- Fig. 1: einen Flugzeugsitz mit einem Sitzunterbau;
- Fig. 2: einen Sitzunterbau in einer Einzeldarstellung;
- Fig. 3: einen Flugzeugsitz mit Sitzgestell aus dem Stand der Technik; und
- Fig. 4: einen Flugzeugsitz mit steifem Sitzunterbau.

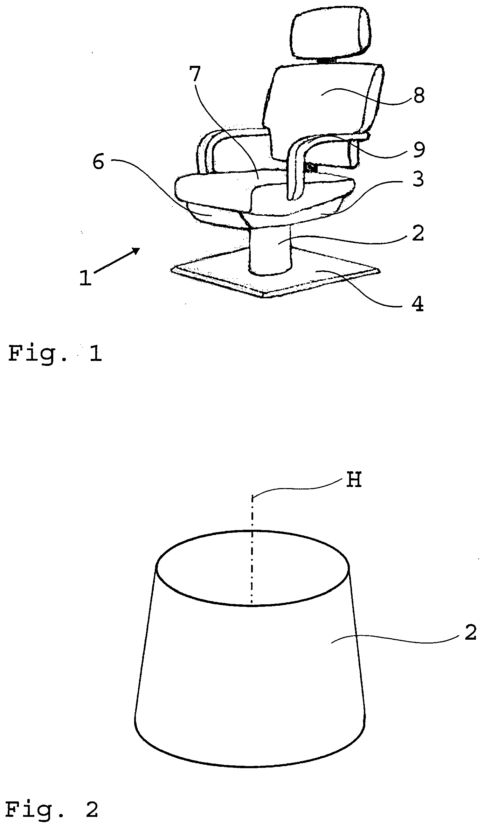

In Fig. 1 ist ein Ausführungsbeispiel eines Flugzeugsitzes 1 mit einem Sitzunterbau 2 dargestellt. Der Sitzunterbau 2 ist an einer ersten Seite, in Fig. 1 am oberen Ende des Sitzunterbaus 2 dargestellt, mit einer Sitzeinheit 3 des Flugzeugsitzes 1 befestigt. Die Sitzeinheit 3 umfasst in diesem Ausführungsbeispiel eine Sitzbasis 6, eine Sitzfläche 7 und eine Lehnenbaugruppe 8. In einem vorteilhaften Ausführungsbeispiel ist der Sitzunterbau 2 an einer Sitzbasis 6 des Flugzeugsitzes 1 befestigbar.

Auf einer zweiten Seite, in Fig. 1 am unteren Ende des Sitzunterbaus 2 dargestellt, ist der Sitzunterbau 2 an einer Bodenanbindungsbaugruppe 4 befestigt. Mit der Bodenanbindungsbaugruppe 4 kann eine steife mechanische Verbindung zwischen dem Sitzunterbau 2 und der Bodenstruktur eines Flugzeugs hergestellt werden.

Der Sitzunterbau 2 stellt die mechanische Verbindung zwischen der Bodenanbindungsbaugruppe 4 und der Sitzeinheit 3 her. Der Sitzunterbau 2 ist in einem vorteilhaften Ausführungsbeispiel sehr steif ausgeführt, so dass Crashlasten in einer Richtung der Bodenebene nur zu geringen Verschiebungen auf der ersten Seite des Sitzunterbaus 4 führen, wodurch eine Rotation oder ein Kippen des Flugzeugsitzes 1 weitgehend verhindert wird.

Der Sitzunterbau 2 weist in diesem Ausführungsbeispiel einen elliptischen Querschnitt und die Form eines Kegelabschnitts auf, so dass die Querschnittsflächen des Sitzunterbaus 2 auf der ersten und zweiten Seite unterschiedlich groß sind. Der Sitzunterbau 2 ist in seiner Grundstruktur ein biegesteifes Schalenbauteil, das in diesem Ausführungsbeispiel in Umfangsrichtung gekrümmt ist. Die Biegesteifigkeit des Sitzunterbaus 2 kann hierdurch verbessert werden, und kann konstruktiv derart ausgelegt werden, dass der Sitzunterbau 2 im Crashfall an seiner ersten Seite eine möglichst geringe translatorische Bewegung parallel zur Bodenebene ausführt.

Der Sitzunterbau 2 kann die Sitzhöhe des Flugzeugsitzes 1 vorrangig bestimmen. Es können verschiedene Sitzhöhen mit unterschiedlich hohen Sitzunterbauten 2 erreicht werden. Die Höhe des Sitzunterbaus 2 des Flugzeugsitzes 1 liegt in vorteilhaften Ausführungsbeispielen zwischen 20 cm und 60 cm. Die vorteilhafte Höhe in diesem Ausführungsbeispiel beträgt 30 cm.

Ein steifer Sitzunterbau 2 kann die entsprechenden Kräfte in einem Crashfall weitgehend ohne eigene Deformation zu Crashelementen zur Energieabsorption weiterleiten, die oberhalb des Sitzunterbaus 2 angeordnet und gezielt zur Kraftbegrenzung und zur Aufnahme von kinetischer Energie vorgesehen sind. Die Energieaufnahme im Crashfall und die dazu notwendigen Wege können mit dem steifen Sitzunterbau 2 bis in den Bereich der Sitzeinheit 3 verlagert werden, wo die Bewegungen zur Energieaufnahme ohne Sekundärbewegung und/oder -rotationen realisiert werden können. Dies ermöglicht eine verkleinerte Bewegungsenveloppe. Die Crashelemente können eine entsprechende kraftbegrenzte Nachgiebigkeit in der Lastrichtung aus dem Crashfall ermöglichen, wobei die Crashelemente unter Energieaufnahme verformt und/oder zerstört werden. Dies betrifft insbesondere Lasten bzw. hohe Beschleunigungen aus einem Crashfall, die weitgehend parallel zur Bodenebene der Kabine des Flugzeugs ausgerichtet sind.

Für Lasten und Beschleunigungen aus einem Crashfall in vertikaler Richtung bzw. Lasten, die senkrecht zur Bodenebene der Kabine des Flugzeugs ausgerichtet sind, ist in einem möglichen Ausführungsbeispiel ein vertikales Crashelement in oder am Sitzunterbau 2 vorgesehen, welches im Übergang bzw. im Anschlussbereich zu einer Sitzeinheit 3 die übertragenen Kräfte begrenzt und hierfür in Richtung der Hochachse H eine kraftbegrenzte Relativbewegung zwischen dem Sitzunterbau 2 und der Sitzeinheit 3 ermöglicht. Dies begrenzt die auf den Passagier und auf die mechanische Struktur einwirkenden Lasten, wodurch Verletzungen des Passagiers und strukturelles Versagen an Teilen des Flugzeugsitzes 1 vermieden werden kann. Das vertikale Crashelement kann in einem möglichen Ausführungsbeispiel unterhalb eines Drehtellers zur Anbindung an eine Sitzeinheit 3 im Lastpfad angeordnet sein. Als Ausführungsformen für das vertikale Crashelement können beispielsweise mechanische Schäume aus Polymeren oder Metallen, Faserverbundstrukturen und/oder metallische Strukturen eingesetzt werden, die in einem Crashfall unter Energieaufnahme gestaucht werden. In einem vorteilhaften Ausführungsbeispiel sind die vertikalen Crashelemente für einen einmaligen Crashfall vorgesehen, wodurch die entsprechenden Kosten und das Gewicht klein gehalten werden können.

Weiterhin ermöglicht der Flugzeugsitz 1 mit dem Sitzunterbau 2 in diesem Ausführungsbeispiel einen schlanken Aufbau des Flugzeugsitzes 1 und eine engere Anordnung von einzelnen komfortablen Flugzeugsitzen 1 in der Kabine eines Flugzeugs. Der Sitzunterbau 2 tritt bei einer Drehung des Flugzeugsitzes 1 aufgrund seiner schlanken Bauweise nicht unter der Sitzfläche 7 hervor. Zudem wird es für einen Passagier möglich, seine Füße allseitig unter den Flugzeugsitz 1 zu stellen, was den Komfort deutlich verbessert.

In diesem Ausführungsbeispiel sind die elektrischen Schaltboxen, die verschiedene Funktionalitäten des Flugzeugsitzes 1 ermöglichen, in dem Sitzunterbau 2 angeordnet. Dieser bietet gegenüber den bekannten Sitzgestellen 5, die gegebenenfalls verkleidet sein müssen, einen entsprechenden Bauraum der mechanisch geschützt ist, und im Crash nur geringen Deformationen unterworfen ist. Daher können die elektrischen Schaltboxen oder auch Geräte hier vorteilhaft angeordnet werden. Die übliche Anordnung solcher Geräte ist beispielsweise in den Armlehnen 9, die auf diese Weise sehr schlank und leicht ausgebildet werden können.

In einem alternativen Ausführungsbeispiel kann der Sitzunterbau 2 genutzt werden, um ein funktionelles Objekt aufzunehmen, wie beispielsweise Pneumatiksysteme und/oder -ventile, Antriebe mit Steuerseilen und/oder Kabelbäume.

Ein funktionelles Objekt, das beispielsweise über Handlöcher, in Fig. 1 nicht dargestellt, entnehmbar sein kann, ist beispielsweise eine Schwimmweste. Das funktionelle Objekt wird hierfür in einem Hohlraum des Sitzunterbaus 2 an vorgesehenen Halterungen und/oder Aufnahmen gelagert. In Abhängigkeit von dem vorgesehenen Objekt können die Halterungen an das funktionelle Objekt angepasst sein.

In Fig. 2 ist ein Ausführungsbeispiel eines Sitzunterbaus 2 in einer Einzeldarstellung gezeigt. Der Sitzunterbau 2 weist in diesem Ausführungsbeispiel eine elliptische Form mit einem Verhältnis von Hauptachse zur Nebenachse des Querschnitts von zwischen 1:1,1 auf. Der mittlere Durchmesser der Querschnittsfläche ist in diesem vorteilhaften Ausführungsbeispiel auf der ersten Seite 30 mm kleiner als auf der zweiten Seite, die in der Darstellung in Fig. 2 verdeckt ist. Die Höhe des Sitzunterbaus 2 entlang der Hochachse H beträgt in diesem Ausführungsbeispiel 300 mm.

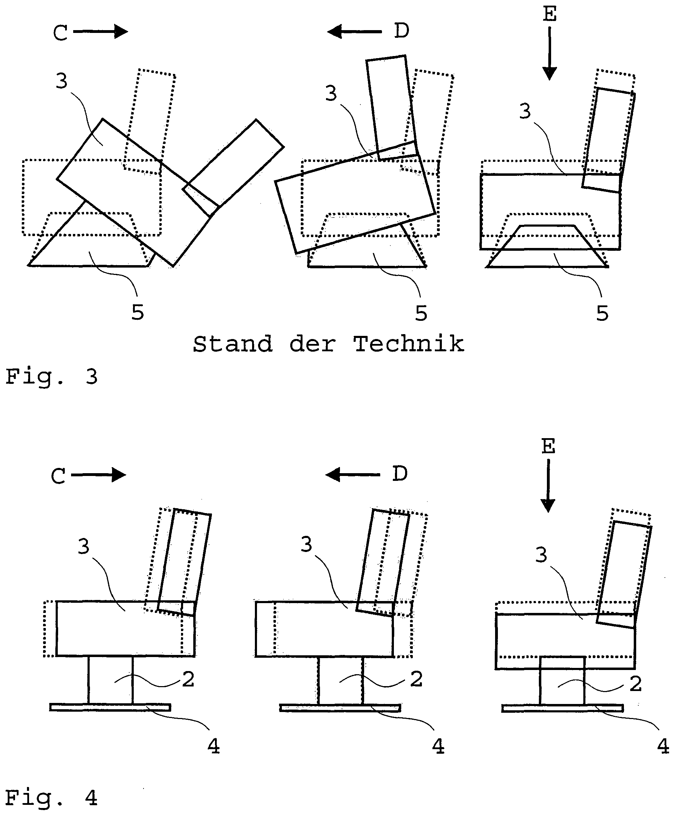

In Fig. 3 ist ein Flugzeugsitz 1 aus dem Stand der Technik mit einem Sitzgestell 5 dargestellt. Der Flugzeugsitz 1 aus dem Stand der Technik ist mit seinem Verformungsverhalten nach drei möglichen Crashfällen mit unterschiedlichen Beschleunigungsrichtungen C, D, E des Masseschwerpunkts eines sitzenden Passagiers, in Fig. 3 nicht gezeigt, dargestellt.

Zu den behördlichen Anforderungen für Flugzeugsitze 1 gehört, dass in einem Crashfall eine Vordeformation des Flugzeugbodens anzunehmen ist, die vom Sitzgestell 5 aufgenommen bzw. ertragen werden muss. Daher ist das Sitzgestell 5 für die Aufnahme der Vordeformation entsprechend plastisch verformbar gestaltet. Dies gilt in besonderer Weise für den unteren Teil. Das Sitzgestell 5 nimmt neben der Vordeformation auch die Belastungen im Crashfall mit hohen Beschleunigungen auf. Die Begrenzung der auf einen sitzenden Passagier einwirkenden Kräfte wird durch die nachgiebige Struktur des Sitzgestells 5 erreicht. Insgesamt stellt sich im unteren Bereich des Flugzeugsitzes 1 eine vergleichsweise große Deformation ein, die zu einer Drehung des Flugzeugsitzes 1 führt, wobei der Drehpunkt bezogen auf die Sitzfläche des Flugzeugsitzes 1 tief liegt, was zu großen Auslenkungen im oberen Bereich des Flugzeugsitzes 1 führt.

Die Auslenkung im Crashfall definiert die Bewegungsenveloppe des Flugzeugsitzes 1 und des sitzenden Passagiers, die von Gegenständen und/oder Objekten in der Kabine des Flugzeugs freigehalten werden müssen. Nach dem Stand der Technik ergibt sich eine entsprechend große Bewegungsenveloppe. Eine steifere Ausführung des Sitzgestells 5 ist nach dem Stand der Technik durch die notwendige Aufnahme von Vorverformungen der Bodenstruktur des Flugzeugs durch das Sitzgestell 5 sowie durch die geforderte Kraftbegrenzung für den Passagier durch Aufnahme kinetischer Energie im Crashfall nicht möglich.

In Fig. 4 sind drei Flugzeugsitze 1 mit einem Ausführungsbeispiel einer Bodenanbindungsbaugruppe 4 dargestellt, die die gleichen Beschleunigungen aus verschiedenen Crashfällen erfahren wie die Flugzeugsitze 1 in Fig. 3. Die Bodenanbindungsbaugruppe 4 leitet Vorverformungen der Bodenstruktur des Flugzeugs nicht an den Sitzunterbau 2 weiter. Daher muss der Sitzunterbau 2 nicht in der Lage sein, Verformungen aufzunehmen, und kann sehr steif ausgeführt werden. Weiterhin wird die Verwendung von leichten und steifen Materialien mit geringem Verformungspotential, wie beispielsweise kohlenstofffaserverstärkten Kunststoffen, ermöglicht, was zu einem leichteren Flugzeugsitz 1 führen kann. Die steife Ausführung des Sitzunterbaus 2 bietet für den Crashfall verschiedene Vorteile, beispielsweise kann eine Drehbewegung des Flugzeugsitzes 1 im Crashfall bei Beschleunigungsrichtungen in Bodenebene C, D weitgehend unterdrückt werden und/oder die Energieaufnahme bzw. Kraftbegrenzung gezielt oberhalb des Sitzunterbaus 2 erfolgen, was eine kleine Bewegungsenveloppe und eine geringere Strukturbelastung des Flugzeugsitzes 1 im Crashfall ermöglichen kann.

## Patentansprüche

1. Flugzeugsitz (1) mit einem Sitzunterbau (2), wobei
- der Sitzunterbau (2) an einer ersten Seite an einer Sitzeinheit (3) des Flugzeugsitzes (1) befestigbar ist, wobei
- der Sitzunterbau (2) an einer zweiten Seite zur flugzeugfesten Befestigung an einer Bodenanbindungsbaugruppe (4) befestigbar ist, wobei
- der Sitzunterbau (2) durch wenigstens ein biegesteifes Schalenbauteil gebildet ist, **dadurch gekennzeichnet, dass**
- ein oberhalb des Sitzunterbaus (2) angebrachtes Mittel zur Kraftbegrenzung vorgesehen ist, wobei
- das Mittel zur Kraftbegrenzung zum Schutz der Überlastung eines Passagiers im Crashfall durch die Begrenzung von Kräften vorgesehen ist, welche in der Bodenebene einer Kabine des Flugzeugs auf den Flugzeugsitz wirken.

2. Flugzeugsitz (1) nach Anspruch 1, **dadurch gekennzeichnet, dass** das Schalenbauteil mindestens in einer Richtung gekrümmt ist.

3. Flugzeugsitz (1) nach Anspruch 1, **dadurch gekennzeichnet, dass** der Sitzunterbau (2) zylinderförmig oder kegelförmig ist.

4. Flugzeugsitz (1) nach einem der vorangehenden Ansprüche, **dadurch gekennzeichnet, dass** der Sitzunterbau (2) einen kreisförmigen oder elliptischen Querschnitt aufweist.

5. Flugzeugsitz (1) nach einem der vorangehenden Ansprüche, **dadurch gekennzeichnet, dass** der Sitzunterbau (2) in wenigstens einem Querschnitt zur Hochachse (H) ein geschlossenes Profil aufweist.

6. Flugzeugsitz (1) nach einem der vorangehenden Ansprüche, **dadurch gekennzeichnet, dass** der Sitzunterbau (2) ein geschlossener Hohlkörper ist.

7. Flugzeugsitz (1) nach einem der Ansprüche 1 bis 5, **dadurch gekennzeichnet, dass** der Sitzunterbau (2) auf zwei gegenüberliegenden Seiten gleich dimensionierte Handlöcher aufweist.

8. Flugzeugsitz (1) nach einem der vorangehenden Ansprüche, **dadurch gekennzeichnet, dass** der Sitzunterbau (2) mindestens ein vertikales Crashelement und/oder einen vertikalen Verformungsabschnitt aufweist.

9. Flugzeugsitz (1) nach einem der vorangehenden Ansprüche, **dadurch gekennzeichnet, dass** der Sitzunterbau (2) über ein Drehelement an einer Sitzeinheit (3) befestigbar ist.

10. Flugzeugsitz (1) nach einem der vorangehenden Ansprüche, **dadurch gekennzeichnet, dass** der Sitzunterbau (2) auf der ersten und/oder der zweiten Seite eine Translationseinheit aufweist.

11. Flugzeugsitz (1) nach einem der vorangehenden Ansprüche, **dadurch gekennzeichnet, dass** der Sitzunterbau (2) einen Hohlraum zur Aufnahme von mindestens einem elektrischen Gerät oder einem funktionellen Objekt aufweist.

12. Flugzeugsitz (1) nach einem der vorangehenden Ansprüche, **dadurch gekennzeichnet, dass** der Sitzunterbau (2) ein faserverstärktes Bauteil ist.

13. Flugzeugsitz (1) nach einem der vorangehenden Ansprüche, **dadurch gekennzeichnet, dass** der Sitzunterbau (2) eine gewickelte Faserstruktur aufweist.

14. Flugzeugsitz (1) nach einem der vorangehenden Ansprüche, **dadurch gekennzeichnet, dass** der Sitzunterbau am oberen und/oder unteren Rand des Schalenbauteils einen metallischen Ring aufweist.

15. Flugzeugsitz (1) nach einem der vorangehenden Ansprüche, **dadurch gekennzeichnet, dass** der Flugzeugsitz (1) eine Bodenanbindungsbaugruppe (4) aufweist, wobei der Sitzunterbau (2) und wenigstens ein Teil der Bodenanbindungsbaugruppe (4) ein Integralbauteil sind.

## Claims

1. Aircraft seat (1), comprising a seat base (2),
- it being possible for the seat base (2) to be fastened on a first side to a seat unit (3) of the aircraft seat (1),
- it being possible for the seat base (2) to be fastened on a second side to a floor connection assembly (4) so as to be securely fastened to the aircraft,
- the seat base (2) being formed by at least one flexurally rigid shell component, **characterized in that**
- a force limiting means located above the seat base (2) is provided,
- the force limiting means being provided for protecting the overload of a passenger in the event of a crash by limiting forces which, in the floor plane of a cabin of the aircraft, act on the aircraft seat.

2. Aircraft seat (1) according to claim 1, **characterized in that** the shell component is curved at least in one direction.

3. Aircraft seat (1) according to claim 1, **characterized in that** the seat base (2) is cylindrical or conical.

4. Aircraft seat (1) according to any of the preceding claims, **characterized in that** the seat base (2) has a circular or elliptical cross section.

5. Aircraft seat (1) according to any of the preceding claims, **characterized in that** the seat base (2) has a closed profile in at least one cross section with respect to the vertical axis (H).

6. Aircraft seat (1) according to any of the preceding claims, **characterized in that** the seat base (2) is a closed hollow body.

7. Aircraft seat (1) according to any of claims 1 to 5, **characterized in that** the seat base (2) has hand holes of identical dimensions on two opposite sides.

8. Aircraft seat (1) according to any of the preceding claims, **characterized in that** the seat base (2) has at least one vertical crash element and/or one vertical deformation portion.

9. Aircraft seat (1) according to any of the preceding claims, **characterized in that** the seat base (2) can be fastened to a seat unit (3) by means of a rotating element.

10. Aircraft seat (1) according to any of the preceding claims, **characterized in that** the seat base (2) has a translation unit on the first and/or the second side.

11. Aircraft seat (1) according to any of the preceding claims, **characterized in that** the seat base (2) has a hollow space for receiving at least one electrical device or one functional object.

12. Aircraft seat (1) according to any of the preceding claims, **characterized in that** the seat base (2) is a fiber-reinforced component.

13. Aircraft seat (1) according to any of the preceding claims, **characterized in that** the seat base (2) has a wound fiber structure.

14. Aircraft seat (1) according to any of the preceding claims, **characterized in that** the seat base has a metal ring at the upper and/or lower edge of the shell component.

15. Aircraft seat (1) according to any of the preceding claims, **characterized in that** the aircraft seat (1) has a floor connection assembly (4), the seat base (2) and at least part of the floor connection assembly (4) being an integral component.

## Revendications

1. Siège d'avion (1) doté d'une structure formant piétement (2), dans lequel
- la structure formant piétement (2) peut être fixée d'un premier côté à une unité de siège (3) du siège d'avion (1), dans lequel
- la structure formant piétement (2) peut être fixée d'un deuxième côté à un composant de rattachement au sol (4), dans lequel
- la structure formant piétement (2) est formée par au moins un élément en coquille inflexible, **caractérisé en ce que**
- un moyen, monté au-dessus de la structure formant piétement (2), est prévu comme limiteur d'effort, dans lequel
- le moyen limiteur d'effort est prévu pour protéger des surcharges un passager en cas de crash par limitation des forces opérant sur le siège d'avion dans le plan du sol d'une cabine de l'avion.

2. Siège d'avion (1) selon la revendication 1, **caractérisé en ce que** l'élément en coquille est courbé dans au moins une direction.

3. Siège d'avion (1) selon la revendication 1, **caractérisée en ce que** la structure formant piétement (2) est en forme de cylindre ou de cône.

4. Siège d'avion (1) selon l'une des revendications précédentes, **caractérisé en ce que** la structure formant piétement (2) comporte une section transversale circulaire ou elliptique.

5. Siège d'avion (1) selon l'une des revendications précédentes, **caractérisé en ce que** la structure formant piétement (2) comporte un profil fermé dans au moins une section transversale à l'axe de la hauteur (H).

6. Siège d'avion (1) selon l'une des revendications précédentes, **caractérisé en ce que** la structure formant piétement (2) est un corps creux fermé.

7. Siège d'avion (1) selon l'une des revendications 1 à 5, **caractérisée en ce que** la structure formant piétement (2) comporte deux trous pour main de mêmes dimensions sur deux côtés opposés.

8. Siège d'avion (1) selon l'une des revendications précédentes, **caractérisé en ce que** la structure formant piétement (2) comporte au moins un élément anti-crash vertical et/ou une section de déformation verticale.

9. Siège d'avion (1) selon l'une des revendications précédentes, **caractérisé en ce que** la structure formant piétement (2) peut être fixée à une unité de siège (3) par un élément de rotation.

10. Siège d'avion (1) selon l'une des revendications précédentes, **caractérisé en ce que** la structure formant piétement (2) comporte une unité de translation sur le premier et/ou le deuxième côté.

11. Siège d'avion (1) selon l'une des revendications précédentes, **caractérisé en ce que** la structure formant piétement (2) comporte un espace creux pour loger au moins un appareil électrique ou un objet fonctionnel.

12. Siège d'avion (1) selon l'une des revendications précédentes, **caractérisé en ce que** la structure formant piétement (2) est un composant renforcé de fibres.

13. Siège d'avion (1) selon l'une des revendications précédentes, **caractérisé en ce que** la structure formant piétement (2) est une structure fibreuse enroulée.

14. Siège d'avion (1) selon l'une des revendications précédentes, **caractérisé en ce que** la structure formant piétement comporte une bague métallique sur le bord supérieur et/ou inférieur de l'élément en coquille.

15. Siège d'avion (1) selon l'une des revendications précédentes, **caractérisé en ce que** le siège d'avion (1) comporte un composant de rattachement au sol (4), dans lequel la structure formant piétement (2) et au moins une partie du composant de rattachement au sol (4) sont une pièce monobloc.
